# FASCICULE DE BREVET EUROPEEN

(11) **EP 2 385 411 B1**
(45) Date de publication et mention de la délivrance du brevet: **23.09.2020**
(21) Numéro de dépôt: 11290203.6
(22) Date de dépôt: 27.04.2011
(51) Int. Cl.: G02B 26/08, G02B 27/00, F41G 7/22

(54) **Procédé de correction de défauts d' aberrations au sein d'un dispositif optique d' observation d'un champ à travers une fenêtre**
Korrekturverfahren von Aberrationen innerhalb einer optischen Vorrichtung, die ein Gebiet durch ein Fenster beobachtet
Aberration correction method within an optical apparatus observing a field through a window

(30) Priorité: 04.05.2010 FR 1001914
(43) Date de publication de la demande: 09.11.2011
(73) Titulaire: MBDA France, 92350 Le Plessis-Robinson (FR)
(72) Inventeur: Greiner, Bernard, 91400 Orsay (FR); Berthier, Sylvain, 77140 Montcourt - Fromonville (FR)
(74) Mandataire: Gevers & Orès

(56) Documents cités:
- EP-A1- 1 203 978
- FR-A1- 2 877 719
- US-B1- 6 871 817
- SPIE, PO BOX 10 BELLINGHAM WA 98227-0010 USA, 2006, XP040232450,

## Description

La présente invention concerne un procédé de correction de défauts d'aberrations au sein d'un dispositif optique d'observation, à orientation mobile, d'un champ à travers une fenêtre dont la forme est sensiblement celle d'un dôme, ainsi qu'un dispositif optique d'observation à orientation mobile dont les défauts d'aberrations sont ainsi corrigés.

Quoique non exclusivement, le procédé de correction optique et le dispositif optique d'observation selon l'invention sont destinés s'appliquer au guidage auto-directif d'un missile, dont il importe que la trajectoire soit corrigée en temps réel en fonction de la position de la cible par rapport au champ de vision dudit dispositif. D'autres applications sont également envisageables, en particulier l'équipement d'un véhicule terrestre ou d'un avion de reconnaissance, par exemple de type drone.

Par le document US-6343767, on connaît déjà un tel dispositif optique d'observation, à orientation mobile, d'un champ à travers une fenêtre présentant sensiblement la forme d'un dôme. Le champ est projeté sur un plan d'observation par l'intermédiaire du dispositif d'observation, ce dispositif comprenant à cet effet des moyens de conjugaison optique du champ avec le plan d'observation et des moyens d'orientation relative du plan d'observation par rapport audit champ observé.

Plus précisément, les moyens d'orientation relative sont constitués de prismes mobiles en rotation autour de l'axe optique du dispositif. Ils permettent ainsi d'orienter la direction de visée dans un cône dont le demi-angle au sommet est égal à 2.(n-1).A, A étant l'angle au sommet des prismes et n l'indice de réfraction du matériau constituant lesdits prismes.

Un tel dispositif, également dénommé « diasporamètre », permet donc d'observer un champ centré sur l'axe optique dudit dispositif, ce champ d'observation pouvant être réorienté par rapport audit axe optique via le jeu de prismes de manière à viser un champ optique différent et situé à proximité du champ centré sur ledit axe optique. Ce dispositif offre ainsi la possibilité, via les prismes rotatifs, d'observer un champ optique très large, ainsi que de rétablir la visée quand celle-ci s'écarte du champ optique recherché, centré sur l'axe optique.

Ce dispositif est généralement utilisé pour une observation à l'infini et travaille dans ce cas avec des faisceaux parallèles. Dans ces conditions, les prismes ne sont pas susceptibles de dégrader la qualité optique de l'image formée sur le plan d'observation, à l'exception éventuellement d'aberrations chromatiques et de distorsion.

Ce dispositif présente néanmoins un inconvénient majeur, lié à des applications telles que le guidage auto-directif d'un missile. En effet, pour de telles applications, il est indispensable que la fenêtre, située en amont du dispositif optique d'observation par rapport à la trajectoire du missile, présente un certain profil aérodynamique, et plus particulièrement la forme d'un dôme au moins sensiblement hémisphérique.

La forme de cette fenêtre introduit alors une divergence non-nulle, correspondant à une focale de l'ordre par exemple de -20 à -5 mètres, ce qui engendre nécessairement des défauts d'aberrations, notamment du type astigmatisme. Autrement dit, du fait de la courbure de la fenêtre, les mises au point du champ dans deux plans perpendiculaires l'un de l'autre ne peuvent s'effectuer toutes deux dans un même plan d'observation perpendiculaire à l'axe optique du dispositif. L'image qui se forme sur ce plan d'observation, ainsi que la performance de visée, s'en trouvent alors sensiblement dégradées.

Par ailleurs, les moyens d'orientation relative précités, tels que des prismes, sont conçus pour travailler avec des faisceaux parallèles. Or, dans le cas présent, le faisceau qui a traversé la fenêtre est sensiblement divergent. De ce fait, les défauts engendrés au niveau de la fenêtre vont atteindre les prismes et y être amplifiés.

Par conséquent, l'ensemble que forment la fenêtre et les moyens d'orientation relative est la source de défauts d'aberrations significatifs, notamment du type astigmatisme.

Dans le document antérieur précité, des moyens de correction optique sont prévus de manière à corriger ces défauts. Pour cela, on agit sur les moyens d'orientation relative, une surface de chaque prisme étant déformée de manière à ne plus être plane et que cette déformation puisse corriger au moins en partie lesdits défauts, à partir d'un calcul préalable de profil de surface basé sur la minimisation des aberrations estimées en termes de polynômes de Zernike.

Cependant, une telle solution présente l'inconvénient de nécessiter un traitement spécifique de chacun des prismes, ce qui s'avère non seulement coûteux mais également difficile à mettre en œuvre. Il est également connu du document EP1203978 A1 de former un hublot de deux éléments permettant d'obtenir un grossissement proche de 1.

La présente invention a pour but de remédier à ces inconvénients et concerne un procédé selon la revendication 1 de correction de défauts d'aberrations au sein d'un dispositif optique d'observation d'un champ à travers une fenêtre présentant sensiblement la forme d'un dôme, le dispositif optique d'observation comprenant des moyens de conjugaison optique du champ observé avec un plan d'observation et des moyens d'orientation relative du plan d'observation par rapport audit champ, des moyens de correction optique étant prévus de manière à corriger lesdits défauts d'aberrations, ce procédé permettant de disposer d'un dispositif optique d'observation qui soit, lors de son fonctionnement, au moins en partie dépourvu des défauts d'astigmatisme engendrés par l'ensemble formé par la fenêtre et les moyens d'orientation relative, tout en étant de fabrication et d'intégration aisées par des opérations courantes.

A cette fin, selon l'invention, le procédé de correction du type défini ci-dessus est remarquable par le fait que l'on dispose les moyens de correction optique entre la fenêtre et les moyens d'orientation relative de manière que lesdits moyens de correction optique forment avec ladite fenêtre un système optique au moins sensiblement afocal.

Ainsi, grâce à la présente invention, les défauts d'astigmatisme engendrés par la fenêtre et les moyens d'orientation relative peuvent être corrigés simplement. En effet, il suffit pour cela d'adjoindre au dispositif optique d'observation (ou de disposer devant ce dispositif) des moyens optiques prévus spécifiquement à cet effet, ces moyens étant disposés entre les moyens d'orientation relative et la fenêtre de manière à être situés au plus près de la fenêtre et ainsi de corriger optiquement les défauts immédiatement après leur naissance, ce qui évite leur propagation et leur amplification ultérieure le long du dispositif, et plus particulièrement après leur propagation au sein des prismes rotatifs.

On notera que, selon l'invention, le système optique formé par la fenêtre et les moyens de correction optique ne doit pas nécessairement être parfaitement afocal. En effet, il est inhérent à ce type de système qu'il ne puisse être afocal pour toutes les orientations du champ observé, si bien qu'il importe d'effectuer un compromis entre la mise au point d'un champ centré sur l'axe optique et celle d'un champ hors axe optique. Ainsi, il importe donc, selon l'invention, que ce système optique puisse être au moins sensiblement afocal, et idéalement le plus afocal possible.

Grâce encore à l'invention, la correction de l'astigmatisme n'induit pas une difficulté supplémentaire pour la fabrication du dispositif optique d'observation, puisque ces moyens de correction optique peuvent être de conception simple, par exemple une lentille, et facilement intégrables aux dispositifs optiques d'observation à orientation mobile de l'art antérieur. Plus précisément, il peut être choisi la forme et la position de la lentille en fonction de la fenêtre, pour que ladite lentille et ladite fenêtre forment un système optique au moins sensiblement afocal, pour lequel l'astigmatisme global est annihilé (ou du moins sensiblement diminué). Autrement dit, les moyens de correction peuvent être achetés ou fabriqués indépendamment du dispositif d'observation, la structure de ce dernier n'étant pas modifiée et pouvant donc être standard, ces moyens de correction s'adaptant simplement à la fenêtre disposée au devant du dispositif.

Selon une autre caractéristique de l'invention, les moyens de correction optique se présentent sous la forme d'une lentille dont la puissance et le signe sont respectivement sensiblement égale et opposé à ceux de la fenêtre, ce qui présente l'avantage de disposer de moyens de correction qui soient de conception et d'intégration aisées, tout s'assurant d'une suppression efficace de l'astigmatisme engendré par la fenêtre et les moyens d'orientation relative.

On notera que les puissances optiques de la fenêtre et de la lentille de correction peuvent ne pas être tout à fait égaux mais proches l'une de l'autre, compte tenu du fait notamment de la distance entre ces deux éléments et des relations de conjugaison optique qui les unissent, compte tenu également que le système optique qu'elles forment ne peut être parfaitement afocal pour toutes les orientations du champ observé.

Dans ce dernier cas, la fenêtre étant généralement divergente, la lentille formant les moyens de correction optique est convergente.

L'invention concerne également un dispositif optique selon la revendication 3 d'observation d'un champ à travers une fenêtre présentant sensiblement la forme d'un dôme, comprenant des moyens de conjugaison optique du champ observé avec un plan d'observation et des moyens d'orientation relative du plan d'observation par rapport audit champ, des moyens de correction optique étant prévus de manière à corriger des défauts d'aberrations au sein du dispositif optique d'observation. Selon l'invention, lesdits moyens de correction optique sont disposés entre ladite fenêtre et lesdits moyens d'orientation relative de manière que lesdits moyens de correction optique forment avec ladite fenêtre un système optique au moins sensiblement afocal.

Selon une autre caractéristique de l'invention, les moyens de correction optique sont montés sur une monture solidaire du dispositif.

Selon une autre caractéristique de l'invention, les moyens de correction optique sont montés sur une monture amovible.

Pour une bonne précision de la conjugaison champ de vision - plan d'observation, les moyens de conjugaison optique sont formés d'une pluralité de lentilles disposées derrière les moyens d'orientation relative.

Selon encore une autre caractéristique de l'invention, les moyens d'orientation relative sont formés de deux prismes indépendants, montés en rotation autour de l'axe optique du dispositif de manière que la direction d'observation soit orientée, par rapport au champ observé, par l'intermédiaire desdits prismes.

Les figures du dessin annexé feront bien comprendre comment l'invention peut être réalisée. Sur ces figures, des références identiques désignent des éléments semblables.
La figure 1 est une coupe longitudinale schématique d'un dispositif optique d'observation d'un champ, selon l'invention.
La figure 2 est une coupe simplifiée de ce même dispositif dans une position d'observation d'un champ centré sur l'axe optique.
La figure 3 est une coupe simplifiée de ce même dispositif dans une position d'observation d'un champ hors de l'axe optique.

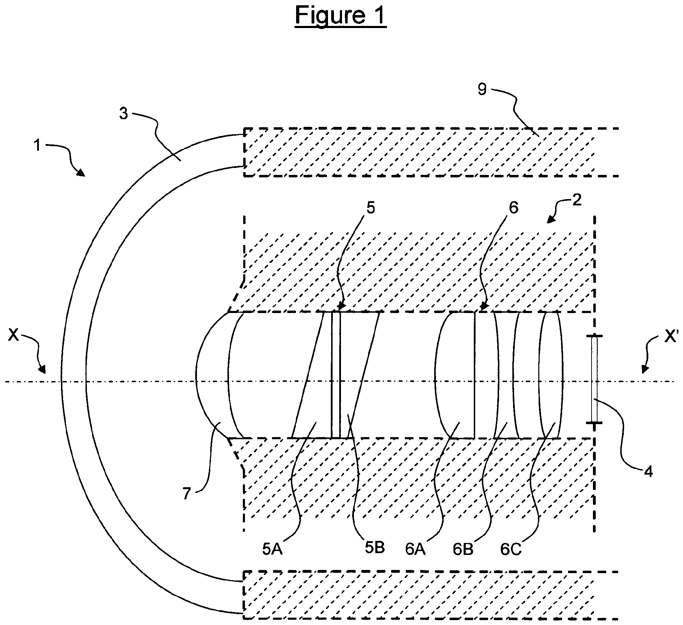

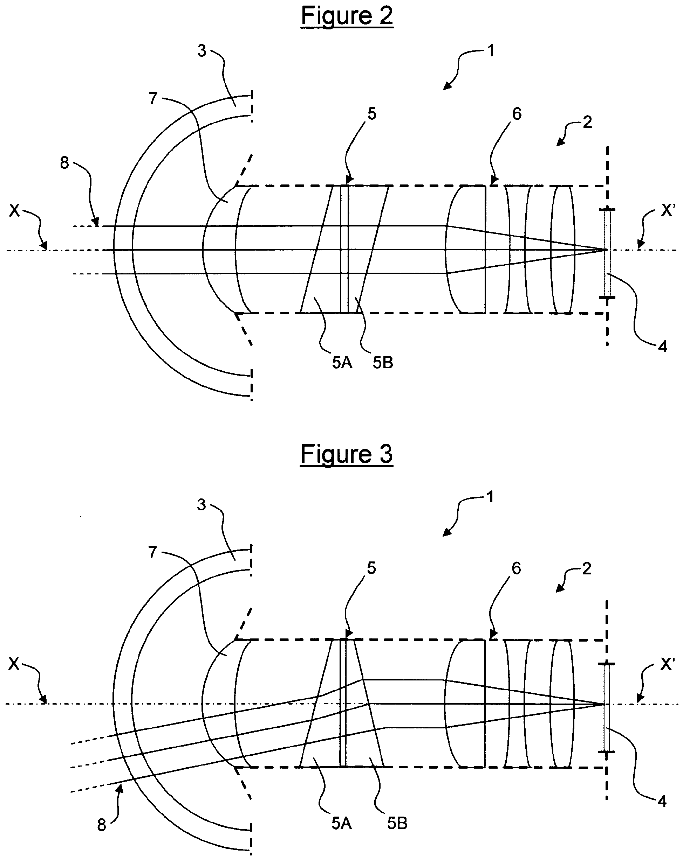

Le dispositif optique d'observation 2 de la figure 1 comporte un ensemble de moyens optiques, tous centrés sur un même axe optique X-X' formant de fait l'axe optique du dispositif, destinés notamment à l'orientation et à la conjugaison d'un champ à observer (par exemple le champ 8 des figures 2 et 3) par rapport à un plan d'observation 4.

Ce dispositif 2 est plus particulièrement destiné à l'observation du champ 8 à travers une fenêtre, telle que la fenêtre 3 de la figure 1, en forme de dôme sensiblement hémisphérique. Cette fenêtre, du fait de sa forme courbée, est un élément optiquement divergent.

Le dispositif d'observation 2 comprend un ensemble de prismes 5A et 5B, qui forment ensemble des moyens d'orientation relative 5 de l'axe optique X-X' par rapport au champ observé, en vue de réorienter un champ initialement non centré sur l'axe optique (par exemple le champ 8 de la figure 3) de manière qu'il soit, après passage dans les prismes 5A et 5B, centré sur l'axe optique. Pour cela, ces deux prismes sont montés en rotation autour de l'axe optique X-X' du dispositif, indépendamment l'un de l'autre, de manière qu'ils puissent être tournés l'un par rapport à l'autre pour réorienter le champ observé au niveau du plan 4. De telles rotations sont rendues possible par l'utilisation de montures adéquates, ce qui est une pratique courante pour l'homme du métier.

Les prismes utilisés peuvent être des prismes de Risley ou encore de Fresnel, mais il peut être recouru à d'autres types de prismes en fonction des applications envisagées.

Dans le cas d'éléments chromatiquement dispersifs, tels que des prismes, il importe de travailler en lumière monochromatique ou dans une bande spectrale étroite. Dès lors, il peut être recouru à une source laser susceptible d'émettre des impulsions laser en direction d'une cible à observer, ces impulsions laser pouvant être réfléchies sur la cible pour être ensuite détectées par un capteur disposé au niveau du plan d'observation 4, cette détection pouvant s'opérer par exemple au moyen d'une caméra synchronisée sur les impulsions de la source laser.

Dans un autre mode de réalisation, les prismes sont remplacés par des lames diffractives.

Le dispositif d'observation 2 comprend également un ensemble de lentilles 6A, 6B et 6C, qui forment ensemble des moyens de conjugaison optique 6 du champ observé 8 avec le plan d'observation 4. Ces moyens 6 se présentent sous la forme d'un objectif positionné de manière que, lorsque le dispositif 2 travaille avec un objet à l'infini, le plan focal image de l'objectif soit confondu avec le plan d'observation 4.

Selon un mode particulier de réalisation qui s'applique par exemple au cas d'un missile à guidage auto-directif, le dispositif 2 comprend un capteur optique disposé au niveau du plan d'observation 4.

Ainsi constitué, le dispositif 2 autorise l'observation d'un champ de vue, par exemple de l'ordre de 10°, avec une réorientation possible du champ, via les moyens d'orientation relative 5, dans une plage de l'ordre par exemple de [-20°; + 20°] ou [-30°; + 30°]. Le dispositif d'observation optique 2 peut donc être utilisé pour des applications où l'on souhaite observer un champ relativement large.

L'ensemble des éléments constituant le dispositif 2 peut être intégré au sein d'un boîtier (partiellement représenté sur la figure 1 par des hachures), chaque élément optique et/ou chaque ensemble d'éléments optiques étant disposé à l'intérieur d'une monture adaptée.

L'ensemble formé par le dispositif d'observation 2 et la fenêtre 3 (elle-même centrée sur l'axe optique X-X' du dispositif 2) - prolongée par un profilé 9 - constitue une partie 1 d'un système de visée destiné à être intégrée à différents types d'équipements, tels qu'un missile (pour lequel la fenêtre 3 présente un profil aérodynamique), un véhicule terrestre ou encore un avion de reconnaissance (par exemple du type drone).

Dans la mesure où le dispositif d'observation 2 est en général fabriqué indépendamment du système auquel il est destiné à être intégré, et donc de la fenêtre 3, ledit dispositif 2 est conçu pour focaliser un objet à l'infini dans le plan d'observation 4, sans tenir compte du fait qu'une fenêtre puisse éventuellement être disposée devant celui-ci. Il s'en suit donc que l'image formée par le dispositif 2 est dégradée par les défauts d'astigmatisme qu'engendrent, d'une part, ladite fenêtre 3 et, d'autre part, les moyens d'orientation relative 5 qui amplifient ces défauts.

Conformément à la présente invention, on dispose devant les différents éléments optiques du dispositif 2 - et en particulier les moyens d'orientation relative 5 - des moyens de correction optique 7 des défauts d'aberrations engendrés par l'ensemble formé par la fenêtre 3 et les moyens d'orientation relative 5. Plus précisément, on dispose ces moyens 7 entre la fenêtre 3 et les moyens d'orientation relative 5, de manière que ces moyens de correction 7 forment avec la fenêtre 3 un système optique au moins sensiblement afocal.

Selon le mode de réalisation de la figure 1, ces moyens de correction se présentent sous la forme d'une lentille 7, dont la forme et la position sont déterminées en fonction de celles de la fenêtre 3 en vue de réaliser le système optique afocal susmentionné. Pour cela, la réalisation la plus simple consiste à faire en sorte que la fenêtre 3 et la lentille de correction 7 présentent des puissances optiques qui soient sensiblement égales en valeur absolue, mais qui soient de signes opposés.

Selon d'autres modes de réalisation, il pourra être recouru à une pluralité de lentilles pour former ces moyens 7, même s'il est préféré de n'utiliser une seule lentille pour des raisons d'encombrement.

En fonction des applications, ces moyens de correction optique 7 peuvent être intégrés de différentes façons. Ils peuvent en particulier être montés sur une monture :
- Selon l'invention solidaire du dispositif d'observation 2, de sorte qu'ils puissent être fabriqués soit ensemble, soit séparément puis intégrés au dispositif en fonction de la fenêtre 3 ;
- solidaire de la fenêtre 3, de sorte que ladite fenêtre bénéficie directement de son moyen de correction optique ;
- indépendante à la fois de la fenêtre 3 et du dispositif 2 ; ou
- amovible de manière que cette monture puisse être rendue tantôt solidaire tantôt indépendante du dispositif 2 ou de la fenêtre 3.

La disposition des moyens de correction optique 7, entre la fenêtre 3 et les moyens d'orientation relative 5, permet de corriger les défauts d'astigmatisme engendrés par cette même fenêtre 3 et les moyens d'orientation relative 5, en faisant en sorte que ladite fenêtre et les moyens 7 ainsi adjoints forment ensemble un système optique au moins sensiblement afocal, bien que ces derniers soient fabriqués de façon indépendante et intégrés à des moments différents.

On notera ici qu'il eut pu paraître plus simple et intuitif de corriger les défauts engendrés par la fenêtre 3 et les moyens d'orientation 5 après ceux-ci. Au contraire, la présente invention consiste à ne pas corriger les défauts après que leur propagation et leur amplification soient établies, mais dès leur naissance, c'est-à-dire juste après la fenêtre 3, de manière que ces défauts ne puissent pas se propager au sein des moyens d'orientation relative 5 et s'y amplifier.

En référence aux figures 2 et 3, on voit que la mise au point d'un champ 8 à observer sur l'axe optique s'effectue bien au niveau du plan d'observation 4 (figure 2), de même que la mise au point d'un champ 8 hors axe optique (par exemple orienté à 30° par rapport audit axe optique) s'opère également sensiblement au niveau du plan d'observation 4 (figure 3), et plus précisément ce champ 8 hors axe optique est ramené sur l'axe optique après avoir traversé les moyens d'orientation relative 5, le second prisme 5B ayant été pour cela tourné de 180° autour de l'axe optique. Le défaut d'astigmatisme que l'on observait au niveau du plan 4, du fait de la disposition d'une fenêtre sensiblement hémisphérique au devant du dispositif 2, est donc au moins en partie corrigée.

Ainsi, il est possible de concevoir le dispositif d'observation 2 et la fenêtre 3 de manière tout à fait indépendante et modulaire, ce qui permet de disposer d'éléments standards, seuls les moyens de correction optique 7 devant être déterminés en fonction de la fenêtre 3 de manière que le faisceau traversant successivement la fenêtre 3 et les moyens 7 soit un faisceau au moins sensiblement parallèle. Ces moyens 7 peuvent ainsi constituer un module indépendant des autres éléments du système de visée, et que l'on intègre au reste dudit système pour corriger les défauts d'aberrations susmentionnés (ou que l'on peut éventuellement intégrer directement à la fenêtre 3).

## Revendications

1. Procédé de correction de défauts d'aberrations au sein d'un dispositif optique d'observation (2) d'un champ (8) à travers une fenêtre (3) présentant sensiblement la forme d'un dôme, le dispositif optique d'observation (2) comprenant des moyens de conjugaison optique (6) du champ observé (8) avec un plan d'observation (4) et des moyens d'orientation relative (5) du plan d'observation (4) par rapport audit champ (8), des moyens de correction optique (7) étant prévus de manière à corriger lesdits défauts d'aberrations,
lesdits moyens de correction optique (7) entre ladite fenêtre (3) et lesdits moyens d'orientation relative (5) étant disposés de manière que lesdits moyens de correction optique (7) forment avec ladite fenêtre (3) un système optique au moins sensiblement afocal, les moyens de correction optique (7) se présentant sous la forme d'une lentille (7) dont la puissance et le signe sont respectivement sensiblement égale et opposé à ceux de la fenêtre (3) ; les moyens de conjugaison optique (6) étant formés d'un ensemble de lentille (6A,6B,6C)pour conjuguer le champ observé (8) avec le plan d'observation;
**caractérisé en ce que** la fenêtre (3), les moyens de conjugaison optique (6), les moyens d'orientation relative (5) et les moyens de correction optique (7) sont centrés sur un même axe optique (X-X') ;
les défauts d'aberration sont des défauts d'astigmatisme ; les moyens d'orientation relative (5) sont formés d'un ensemble de prismes (5A, 5B) pour réorienter un champ initialement non centré sur l'axe optique (X-X') de manière qu'il soit centré sur l'axe optique (X-X') après passage dans les prismes (5A, 5B) ;
les moyens de correction optique (7) sont montés sur une monture solidaire du dispositif optique d'observation (2).

2. Procédé selon la revendication 1,
**caractérisé en ce que** la fenêtre (3) et la lentille (7) sont respectivement divergente et convergente.

3. Dispositif optique d'observation (2) d'un champ (8) à travers une fenêtre (3) présentant sensiblement la forme d'un dôme, comprenant des moyens de conjugaison optique (6) du champ observé (8) avec un plan d'observation (4) et des moyens d'orientation relative (5) du plan d'observation (4) par rapport audit champ (8), des moyens de correction optique (7) étant prévus de manière à corriger des défauts d'aberrations au sein du dispositif optique d'observation (2),
lesdits moyens de correction optique (7) sont disposés entre ladite fenêtre (3) et lesdits moyens d'orientation relative (5) de manière que lesdits moyens de correction optique (7) forment avec ladite fenêtre (3) un système optique au moins sensiblement afocal, les moyens de correction optique (7) se présentant sous la forme d'une lentille (7) dont la puissance et le signe sont respectivement sensiblement égale et opposé à ceux de la fenêtre (3) ; les moyens de conjugaison optique (6) étant formés d'un ensemble de lentille (6A,6B,6C)pour conjuguer le champ observé (8) avec le plan d'observation; **caractérisé en ce que** la fenêtre (3), les moyens de conjugaison optique (6), les moyens d'orientation relative (5) et les moyens de correction optique (7) sont centrés sur un même axe optique (X-X') ;
les défauts d'aberration sont des défauts d'astigmatisme ; les moyens d'orientation relative (5) sont formés d'un ensemble de prismes (5A, 5B) pour réorienter un champ initialement non centré sur l'axe optique (X-X') de manière qu'il soit centré sur l'axe optique (X-X') après passage dans les prismes (5A, 5B) ;
les moyens de correction optique (7) sont montés sur une monture solidaire du dispositif optique d'observation (2).

4. Dispositif selon la revendication 3, **caractérisé en ce que** les moyens de correction optique (7) sont montés sur une monture amovible.

5. Dispositif selon l'une des revendications 3 à 4,
**caractérisé en ce que** les moyens de conjugaison optique (6) sont formés d'une pluralité de lentilles (6A,6B,6C) disposées derrière les moyens d'orientation relative (5).

6. Dispositif selon l'une des revendications 3 à 5,
**caractérisé en ce que** les moyens d'orientation relative (5) sont formés de deux prismes (5A,5B) indépendants, montés en rotation autour de l'axe optique (X-X') du dispositif (2) de manière que la direction d'observation (4) soit orientée, par rapport au champ observé (8), par l'intermédiaire desdits prismes (5A,5B).

## Patentansprüche

1. Korrekturverfahren von Aberrationen innerhalb einer optischen Beobachtungsvorrichtung (2) eines Gebiets (8) durch ein Fenster (3), das im Wesentlichen die Form einer Kuppel aufweist, wobei die optische Beobachtungsvorrichtung (2) Mittel zum optischen Konjugieren (6) des beobachteten Gebiets (8) mit einer Beobachtungsebene (4) und Mittel zum relativen Ausrichten (5) der Beobachtungsebene (4) in Bezug auf das Gebiet (8) umfasst, wobei Mittel zur optischen Korrektur (7) derart vorgesehen sind, dass sie die Aberrationen korrigieren,
wobei die Mittel zur optischen Korrektur (7) zwischen dem Fenster (3) und den Mitteln zum relativen Ausrichten (5) derart angeordnet sind, dass die Mittel zur optischen Korrektur (7) mit dem Fenster (3) ein optisches System bilden, das mindestens im Wesentlichen brennpunktlos ist, wobei die Mittel zur optischen Korrektur (7) die Form einer Linse (7) aufweisen, deren Leistung und Vorzeichen jeweils im Wesentlichen gleich und denjenigen des Fensters (3) entgegengesetzt sind;
wobei die Mittel zum optischen Konjugieren (6) aus einer Linsenbaugruppe (6A, 6B, 6C) gebildet sind, um das beobachtete Gebiet (8) mit der Beobachtungsebene zu konjugieren;
**dadurch gekennzeichnet, dass**
das Fenster (3), die Mittel zum optischen Konjugieren (6), die Mittel zum relativen Ausrichten (5) und die Mittel zur optischen Korrektur (7) auf eine selbe optische Achse (X-X') zentriert sind;
wobei die Aberrationen Astigmatismusfehler sind;
wobei die Mittel zum relativen Ausrichten (5) aus einer Baugruppe von Prismen (5A, 5B) gebildet sind, um ein Gebiet, das anfänglich nicht auf die optische Achse (X-X') zentriert ist, derart umzurichten, dass es nach der Passage in den Prismen (5A, 5B) auf die optische Achse (X-X') zentriert ist;
wobei die Mittel zur optischen Korrektur (7) auf einem Aufbau montiert sind, der fest mit der optischen Beobachtungsvorrichtung (2) verbunden ist.

2. Verfahren nach Anspruch 1,
**dadurch gekennzeichnet, dass** das Fenster (3) und die Linse (7) jeweils divergierend und konvergierend sind.

3. Optische Beobachtungsvorrichtung (2) eines Gebiets (8) durch ein Fenster (3), das im Wesentlichen die Form einer Kuppel aufweist, die Mittel zum optischen Konjugieren (6) des beobachteten Gebiets (8) mit einer Beobachtungsebene (4) und Mittel zum relativen Ausrichten (5) der Beobachtungsebene (4) in Bezug auf das Gebiet (8) umfasst, wobei Mittel zur optischen Korrektur (7) derart vorgesehen sind, dass Aberrationen innerhalb der optischen Beobachtungsvorrichtung (2) korrigiert werden,
wobei die Mittel zur optischen Korrektur (7) zwischen dem Fenster (3) und den Mitteln zum relativen Ausrichten (5) derart angeordnet sind, dass die Mittel zur optischen Korrektur (7) mit dem Fenster (3) ein optisches System bilden, das mindestens im Wesentlichen brennpunktlos ist, wobei die Mittel zur optischen Korrektur (7) die Form einer Linse (7) aufweisen, deren Leistung und Vorzeichen jeweils im Wesentlichen gleich und denjenigen des Fensters (3) entgegengesetzt sind;
wobei die Mittel zum optischen Konjugieren (6) aus einer Linsenbaugruppe (6A, 6B, 6C) gebildet sind, um das beobachtete Gebiet (8) mit der Beobachtungsebene zu konjugieren; **dadurch gekennzeichnet, dass**
das Fenster (3), die Mittel zum optischen Konjugieren (6), die Mittel zum relativen Ausrichten (5) und die Mittel zur optischen Korrektur (7) auf eine selbe optische Achse (X-X') zentriert sind;
wobei die Aberrationen Astigmatismusfehler sind;
wobei die Mittel zum relativen Ausrichten (5) aus einer Baugruppe von Prismen (5A, 5B) gebildet sind, um ein Gebiet, das anfänglich nicht auf die optische Achse (X-X') zentriert ist, derart umzurichten, dass es nach der Passage in den Prismen (5A, 5B) auf die optische Achse (X-X') zentriert ist;
wobei die Mittel zur optischen Korrektur (7) auf einem Aufbau montiert sind, der fest mit der optischen Beobachtungsvorrichtung (2) verbunden ist.

4. Vorrichtung nach Anspruch 3,
**dadurch gekennzeichnet, dass** die Mittel zur optischen Korrektur (7) auf einem abnehmbaren Aufbau montiert sind.

5. Vorrichtung nach einem der Ansprüche 3 bis 4,
**dadurch gekennzeichnet, dass** die Mittel zum optischen Konjugieren (6) aus einer Vielzahl von Linsen (6A, 6B, 6C) gebildet sind, die hinter den Mitteln zum relativen Ausrichten (5) angeordnet sind.

6. Vorrichtung nach einem der Ansprüche 3 bis 5,
**dadurch gekennzeichnet, dass** die Mittel zum relativen Ausrichten (5) aus zwei unabhängigen Prismen (5A, 5B) gebildet sind, die in Drehung um die optische Achse (X-X') der Vorrichtung (2) derart montiert sind, dass die Beobachtungsrichtung (4) in Bezug auf das beobachtete Gebiet (8) mit Hilfe der Prismen (5A, 5B) ausgerichtet ist.

## Claims

1. Process to correct aberration defects within an optical viewing device (2) for observing a field (8) through a window (3) with substantially a dome shape, the optical viewing device (2) comprising optical conjugation means (6) for the field (8) being observed with a viewing plane (4) and relative orientation means (5) for the viewing plane (4) with respect to said field (8), optical correction means (7) being provided so as to correct said aberration defects,
said optical correction means (7) between said window (3) and said relative orientation means (5) are disposed so that said optical correction means (7) form together with said window (3) an at least substantially afocal optical system, the optical correction means (7) having the shape of a lens (7) whose power and sign are respectively substantially equal and opposed to those of the window (3), the optical conjugation means (6) being formed of a set of lenses (6A, 6B, 6C) in order to conjugate the field (8) being observed with the viewing plane;
**characterized in that** the window (3), the optical conjugation means (6) and the optical correction means (7) are centered on a same optical axis (X-X'),the aberrations defects are astigmatism defects,
the relative orientation means (5) are formed of a set of prisms (5A, 5B) in order to re-orient a field initially not centered on the optical axis (X-X') so that it is centered on the optical axis (X-X') after passing the prisms (5A, 5B);
the optical correction means (7) are mounted on a support integral with the optical viewing device (2).

2. Process according to claim 1,
**characterized in that** the window (3) and the lens (7) are respectively divergent and convergent.

3. Optical viewing device (2) for observing a field (8) through a window (3) with substantially the shape of a dome, comprising optical conjugation means (6) for the field (8) being observed with an observation plane (4) and relative orientation means (5) for the observation plane (4) with respect to said field (8), optical correction means (7) being provided so as to correct aberration defects within the optical viewing device (2),
said optical correction means (7) are arranged between said window (3) and said relative orientation means (5) so that said optical correction means (7) form together with said window (3) an at least substantially afocal optical system the optical correction means (7) having the shape of a lens (7) whose power and sign are respectively substantially equal and opposed to those of the window (3),
the optical conjugation means (6) being formed of a set of lenses (6A, 6B, 6C) in order to conjugate the field (8) being observed with the viewing plane;
**characterized in that** the window (3), the optical conjugation means (6) and the optical correction means (7) are centered on a same optical axis (X-X'),
the aberrations defects are astigmatism defects, the relative orientation means (5) are formed of a set of prisms (5A, 5B) in order to re-orient a field initially not centered on the optical axis (X-X') so that it is centered on the optical axis (X-X') after passing the prisms (5A, 5B);
the optical correction means (7) are mounted on a support integral with the optical viewing device (2).

4. Device according to claim 3,
**characterized in that** the optical correction means (7)
are mounted on a removable support.

5. Device according to any of claims 3 to 4, **characterized in that** the optical conjugation
means (6) are formed with a plurality of lenses (6A, 6B, 6C) arranged behind the relative orientation means (5).

6. Device according to any of claims 3 to 5, **characterized in that** the relative orientation
means (5) are made of two independent prisms (5A, 5B) rotationally mounted around the optical axis (X-X') of the device (2) so that the observation direction (4) is oriented, with respect to the field (8) being observed, through said prisms (5A, 5B).
